# EUROPEAN PATENT SPECIFICATION

(11) **EP 2 951 223 B1**
(45) Date of publication and mention of the grant of the patent: **29.03.2017**
(21) Application number: 14707644.2
(22) Date of filing: 03.02.2014
(51) Int. Cl.: C08G 18/50, C08G 18/32, C08G 18/48, C08J 9/14, C08J 9/16, C08G 18/64

(54) **COMPOSITION FOR MANUFACTURING AN ELASTIC TANNIN BASED FOAM MATERIAL, AND PROCESS THEREOF**
ZUSAMMENSETZUNG ZUR HERSTELLUNG EINES ELASTISCHEN AUF TANNIN BASIERENDEN SCHAUMSTOFFS UND VERFAHREN DAFÜR
COMPOSITION POUR LA FABRICATION D'UN MATÉRIAU DE MOUSSE ÉLASTIQUE À BASE DE TANNINS ET PROCÉDÉ CORRESPONDANT

(30) Priority: 04.02.2013 IT TO20130091
(43) Date of publication of application: 09.12.2015
(73) Proprietor: Silvachimica S.r.l., 12080 San Michele Mondovì (IT); Université de Lorraine, 54052 Nancy Cedex (FR)
(72) Inventor: BASSO, Maria, Cecilia, F-88000 Epinal (FR); GIOVANDO, Samuele, I-12065 Monforte d'Alba (CN) (IT); PIZZI, Antonio, F-88000 Chantraine (FR)
(74) Representative: Cian, Paolo
(86) International application number: PCT/EP2014/000271
(87) International publication number: WO 2014/117946

(56) References cited:
- EP-A1- 1 630 185
- US-A- 3 577 358
- US-A- 3 654 194
- US-A- 4 032 483

## Description

The present invention relates in general to foam materials, otherwise called foamy or cellular materials, and more particularly to a composition for obtaining such a material based on tannins, having properties of elasticity.

Tannins are natural compounds of plant origin, therefore non-toxic and commonly deemed to be acceptable from an environmental point of view, differently from synthetic materials which, being derived from petrochemicals, are potentially polluting. Tannins have a renewable or eco-compatible character, together with characteristics of a high reactivity and low cost.

In particular, vegetable tannins have a phenolic nature that makes them usable in the synthesis of rigid foam or foamy materials of the tannin-furan type.

US-3,654,194 relates to a process for producing polyoxyalkylene ether-polyols from lignin and tannin, and discloses a composition for preparing a foam comprising 100 g (44.7 weight %) of tannin polyol, 3 g of diethylethanolamine and 89 g (39.8 weight %) of polymethylene-polyphenyl polyisocyanate.

US-3,577,358 relates to organic isocyanate-lignin products and process, and discloses composition for obtaining a semirigid lignin polyurethane foam, which contains 44% of tannins, methylmorpholine, and 43 parts by weight of a mixture of 2,4-toluene diisocyanate and 2,6-toluene diisocyanate.

Tannin based foam materials are known, for example from the Italian patent applications TO2011A000656 and TO2012A000860, as well as from scientific publications (G. Tondi, A. Pizzi, Industrial Crops and Products, 29, 2009, 356-363; C. Lacoste, M.C. Basso, A. Pizzi, M.-P. Laborie, A. Celzard, V. Fierro, Industrial Crops and Products, 43, 2013, 245-250). Foam materials of this type can be prepared in an aqueous medium by using a mixture of condensed (polyflavonoid) tannins, furfuryl alcohol, volatile solvents and/or compounds adapted to generate a blowing agent in situ, a possible cross-linking agent such as formaldehyde, and an acid catalyst, usually para-Toluenesulfonic acid (p-TSA).

In particular, the present invention relates to a composition usable for manufacturing a tannin based foamed or cellular material, having the features mentioned in the preamble of appended claim 1.

The physical and mechanical properties of foam materials having the features referred to above, are fully comparable to those of the traditional foam materials commercially known, with the advantage of having a natural origin and improved characteristics of fire resistance, with respect to polyurethane materials.

However, just as phenolic foam materials of purely synthetic origin, these known tannin based materials have the drawback of being rigid and fragile, which makes them less suitable for a variety of applications.

In an attempt to reduce the stiffness of these known materials, additives such as glycerol have been used (X. Li, A. Pizzi, M. Cangemi, V. Fierro, A. Celzard, Industrial Crops and Products, 37, 2012, 389-393), but this did not allow appreciable improvements to be obtained. In fact, the foam materials at issue were still significantly friable and provided with a little resistance against impacts.

The main object of the invention is to provide a composition that allow a tannin based foam material to be obtained, provided with characteristics of elasticity and flexibility, which allows proportion of open and closed cells of the material to be controlled at will, and that is therefore suitable for use as an insulating material and/or as a mechanical stress dampening material, and that is therefore usable in various fields such as transportation, construction, packaging, manufacturing of furniture and fittings, etc.

This object is reached by the invention, by means of the composition defined in the appended claims.

By virtue of the fact that the composition of the invention includes an amount of tannins smaller than 80% by weight and an amount of isocyanate in the range between 5% and 80% by weight, and of the fact that it comprises at least a substance having an aminic functionality as well as an alkoxylate functionality, which substance includes at least one amino group and at least one alkoxylated group, and that the substance including at least one amino group and at least one alkoxylated group is an alkoxylated derivative of a coco amine, of a tallow amine, of oleylamine and/or of stearylamine, it is possible to obtain a foam material having the desired characteristics of elasticity and flexibility. Furthermore, the foam material obtainable from the composition according to the invention is not friable and has characteristics of elastic shape memory by virtue of which, after application of a stress with a resulting deformation of the material, the material is able to recover substantially its original shape.

The composition comprises at least a substance having an aminic functionality as well as an alkoxylate functionality, which substance includes at least one amino group and at least one alkoxylated group, said at least one amino group and at least one alkoxylated group being part of a same molecule, characterized in that it comprises said substance including at least one amino group and at least one alkoxylate group according to an amount not greater than 80% by weight, and in that said substance is an alkoxylated derivative of a coco amine, of a tallow amine, of oleylamine and/or of stearylamine.

In particular, the substance including at least one amino group and at least one alkoxylated group, by virtue of the presence of the amino group, performs the function of a catalyst during reaction of the components of the composition and, by virtue of the presence of the alkoxylated group, allows to give the foam material the desired characteristics of elasticity.

Moreover, the alkoxylated group of this substance, owing to its affinity with tannins, allows a suspension thereof to be obtained, and reacts exothermically with the isocyanate together with the -OH groups in the tannin molecules, in particular in the alcohol groups on the heterocycle, so as to promote the reaction. In addition, this substance also allows a pH value to be obtained, which is suitable for ensuring that reaction between the isocyanate and the tannins may takes place.

Also, the composition of the invention has the advantage of allowing the use of condensed tannins both of the procyanidin and prodelphinidin type (e.g. obtained from wood of pine, pecan nut, fir, Douglas, etc.) and/or prorobineditinidin type, and/or of profisetinidin (e.g. obtained from wood of mimosa, quebracho, etc.), and of hydrolysable tannins (e.g. obtained from wood of chestnut, tara, etc.), which makes the composition of the invention more versatile than that of the tannin-furan foam materials known, which can be prepared only from condensed tannins. The tannins used in the composition of the invention may consist of mixtures of the above mentioned tannins, and may also be derived from chemical transformation or modification of the same, such as, for example, oxidized, acetylated, esterified, ethoxylated tannins, and/or by introduction of amino groups.

In conclusion, the composition of the invention allows a spongy type foam material to be manufactured in a simple manner, which comprises a high percentage of natural raw materials, differently from the elastic foam materials commercially available that, being obtained from industrial products derived from petrochemicals, are almost entirely synthetic.

Moreover, differently from other highly flexible foam materials of petrochemical origin, such as sponge rubber, the tannin based foam materials of the invention are not subject to phenomena of formation and detachment of burning droplets or particles during combustion, which could be a potential source of fire. This characteristic is of paramount importance to ensure safety in the use of such materials, in the case of their combustion.

The tannin based foam materials of the invention emit a reduced amount of volatile organic compounds (VOC), particularly of gaseous substances (FOG), unlike other known flexible foam materials, such as polyurethane foam, which contain components and additives that emit volatile organic substances responsible for the so-called "fogging", so that, as a result of their exposure to high-heat conditions, they originate vapors which may condense on cold surfaces. This reduced emission of volatile organic compounds (VOC) also occurs in the event of combustion of the foam materials of the invention. This characteristic of the foam materials of the invention is important in view of their use by the automotive industry that requires foam materials which, having to be used inside of the motor-vehicle passenger compartment, do not emit vapors that may condense, for example, on the windows and windshield surface.

The aforementioned substance including at least one amino group and at least one alkoxylated group consists of at least one alkoxylated amine, such as an ethoxylated amine and/or a propoxylated amine, or mixtures thereof.

In the case of an ethoxylated amine, the characteristics of elasticity of the material of the invention are mainly derived from the presence of ethoxylated chains and urethane groups generated during reaction of the various components of the composition.

Advantageously, if the aforesaid substance including at least one amino group and at least one alkoxylated group consists of an ethoxylated amine.

Also, the subject of the invention are a process for manufacturing a foam material based on vegetable tannins starting from the above composition, as well as a foam material obtainable from the above composition and from the above process.

Further characteristics and advantages of the invention will become clearer from the following detailed description, given by way of non-limiting example and referred to the accompanying figures in which:
- Figure 1 is a magnified image made by SEM of a cross section of a sample of foam material obtained from the composition of the invention and indicated as sample A8 in an example described below, and
- Figure 2 is a diagram showing curves of the stress values as a function of the deformation, referring to the mechanical behavior of the sample A8, subjected to repetitive compression tests.

### GENERAL DESCRIPTION OF THE COMPOSITION

The invention relates to a composition adapted to allow a cellular type foam material to be manufactured, of the type with open and/or closed cells, comprising a mixture of tannins, of the condensed type and/or of the hydrolyzable type, an isocyanate, and at least a substance including an aminic functionality as well as an alkoxylate functionality, which substance includes at least one amino group and at least one alkoxylated group, said at least one amino group and at least one alkoxylated group being part of a same molecule, characterized in that it comprises said substance including at least one amino group and at least one alkoxylate group according to an amount not greater than 80% by weight, and in that said substance is an alkoxylated derivative of a coco amine, of a tallow amine, of oleylamine and/or of stearylamine. Optionally the composition comprises one or more additives.

The reaction that occurs between the tannins, the isocyanate and the substance referred to above, is schematized below.

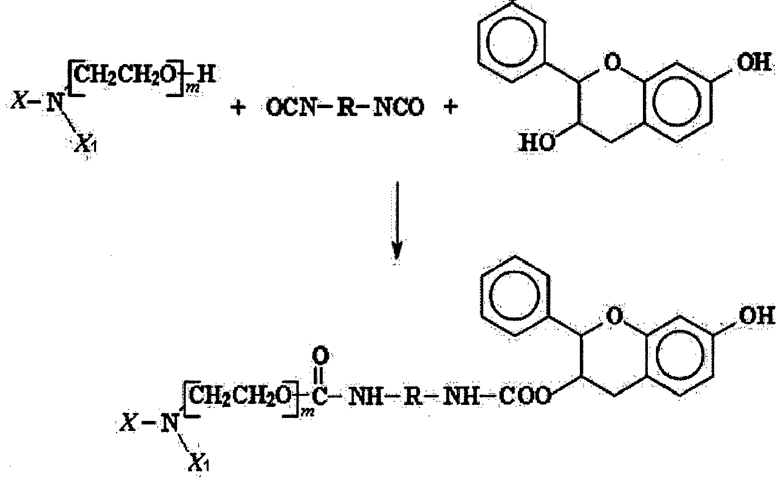

In this reaction, m is an integer equal to 0 or greater than 0, while X and X1 may represent hydrogen groups or ethoxy and/or propoxy groups, respectively in the case of an ethoxylated amine or of a propoxylated amine, or they still may represent various structures, such as saturated or unsaturated aliphatic, aromatic, linear or branched chains of carbon atoms. More the m value is higher, the more the foam material will have characteristics of high elasticity.

The alkoxy groups of the alkoxylated amine may be ethoxylated, propoxylated, or mixtures thereof. Preferably, the alkoxy groups are ethoxylate groups. The degree of alkoxylation of the alkoxylated amine is conveniently comprised between 1 and 40.

As a substance including at least one amino group and at least one alkoxylated group, alkoxylated polyamines can be used as an alternative to the aforesaid ethoxylated amine or together with it in the form of a mixture, such as, without this may constitute a limitation, ethoxylated tallow diamine with 3 to 15 moles of ethoxylation, polyoxylamines or polyethylene glycol-bis-amines.

Depending on its structure, the above substance including at least one amino group and at least one alkoxylated group can also undergo further reactions with the isocyanate.

In the reaction occurring between the aforesaid substance together with isocyanate and tannin, particularly in the case of the alkoxylated amine, the proportion of the various reactants is preferably chosen so as to be stoichiometric, in order to avoid the alkoxylated amine and/or other additives that may potentially react with the isocyanate, to replace the tannins in the reaction with the isocyanate itself.

During preparation of the composition, tannins are used in the form of powder, according to an amount up to 80% by weight of the composition, and conveniently up to 50% by weight of the composition.

With reference to the following non-limiting example, a condensed tannin of the profisetinidin type can be used as tannin, which is extracted from quebracho wood and is marketed by the Company Silvateam under the name Tupafin ATO. In any case, it is also possible to use other types of tannins, such as condensed tannins of the procyanidin and/or prodelphinidin and/or prorobineditinidin type, and/or hydrolysable tannins. Furthermore, tannins in the form of mixtures of the above mentioned tannins can be used, and/or in the form of tannins derived from chemical transformation or modification of the same.

The isocyanate is added according to an amount comprised between 5% and 80% of the composition, for example according to an amount comprised between 10% and 35% by weight, in the form of monomeric, polymeric, or modified isocyanate, or a mixture thereof, or one-component polyurethan isocyanate.

The substance including at least one amino group and at least one alkoxylated group is used according to a proportion up to 80% by weight of the composition.

The composition may further comprise water up to 40% by weight, which is added to the composition itself in addition to the water naturally present in the tannins and in the other reactants.

Furthermore, the composition may include blowing agents such as carbon dioxide, gas generating salts, or substances having a low boiling point such as n-pentane, cyclopentane, isopentane and mixtures thereof.

Compounds able to reduce viscosity of the initial mixture can also be used in the composition, such as triethyl phosphate, triphenyl phosphate or tris(2-chloroisopropyl)-phosphate, according to a proportion between 40% and 100% by weight with respect to the tannin.

The composition may possibly comprise one or more additives according to a proportion not exceeding 50% by weight, conveniently less than 20% by weight. These additives may include, without implying a limiting function, emulsifying agents, surfactants, humectants, plasticizers, as well as compounds for reducing the fire auto-extinguishing time for increasing the fire resistance, inorganic or organic fillers, colorants, preservatives, additives for controlling the proportion of open/closed cells, etc. Moreover, proteins such as albumin can be included in the composition, according to a limited proportion, in order to obtain a more hydrophilic foam material.

Also cross-linking agents, such as formaldehyde, glyoxal, hexamine, acetaldehyde, propionaldehyde, butyraldehyde, furaldehyde, may be may used. Attention must be paid in choosing these additives since they can possibly react with isocyanate and, in particular, to their possible effect on the expansion process and on the physical-mechanical properties of the resulting material. For example, in the case of materials having low VOC emissions, the possible additives must be chosen in such a manner they cannot cause an increase in these emissions.

The degree of elasticity of the foam material obtained from the composition, depends primarily on proportions between the tannin and the substance including at least one amino group and at least one alkoxylated group, and between the tannin and the isocyanate, as well as from the degree of alkoxylation of the alkoxylated group and from the additives used.

The invention is explained in a greater detail with reference to the following non-limiting example, of a composition and of a process allowing to obtain a tannin based elastic foam material.

### EXAMPLE

For preparing the composition of the invention, a process has been used including an initial step of preparing a preliminary composition comprising the aforesaid substance according to the present invention, as well as the possible additives.

Subsequently, tannin was added to this preliminary composition, and a homogenization step of the resulting mixture was performed. Then, the isocyanate was added, and a final homogenization step of the mixture took place.

By using compositions according to the invention prepared as described above, four samples of foam material were produced. These samples are referred in the following as samples A8, A9, A10 and A20.

The specific composition of each sample was obtained as indicated below.

The tannin powder (5 g for the samples A8 and A9, and 6 g for the samples A10 and A20), consisting of the product Tupafin ATO mentioned above, was mixed by mechanical stirring to the substance including at least one amino group and at least one alkoxylated group, in this case coconut fatty ethoxylated amine 12 moles (7 g for the samples A8 and A9, and 6 g for the samples A10 and A20). Also, for the samples A10 and A20, 3.5 and 4 g, respectively, of Tris(2-chloroisopropyl)-phosphate (TCPP) were also added with the function of a fireproofing agent. Only in the case of preparation of the sample A20, a foaming agent (n-pentane) was added according to the amount of 1.2 g.

Each composition was mixed in order to obtain a homogeneous mixture.

Then, isocyanate was added to each mixture, in particular a polyisocyanate (Poly methylendiphenyl diisocyanate (pMDI)) according to an amount of 4 g for the sample A8, 2.5 g for the sample A9, 3.5 g for the sample A10 and 3.5 g for sample A20.

The following Table 1 shows the compositions of the foam materials of each of the samples A8, A9, A10 and A20.

**Table 1 - Composition of the samples of the foam material**

| ***Formulation*** | ***A8*** | ***A9*** | ***A10*** | ***A20*** |
|---|---|---|---|---|
| Tannin - Tupafin ATO (g) | *5* | *5* | *6* | *6* |
| Coconut fatty ethoxylated amine - 12 moles (g) | *7* | *7* | *6* | *6* |
| Poly methylendiphenyl diisocyanate (pMDI) (g) | *4* | *2,5* | *3,5* | *3,5* |
| Tris(2-chloroisopropyl)-phosphate - TCPP (g) | - | - | *3,5* | *4* |
| n-pentane (g) | - | - | - | *1,2* |

Each mixture was then subjected to further stirring for 15 seconds. After this step, each mixture was poured into a previously prepared mold having a desired shape, and the expansion of the various mixtures started immediately in the relative mold. It was therefore expected a time for hardening the foam material so obtained.

All compositions of the samples were found to be particularly suitable both for the batch production and for the continuous production, as well as for in situ applications.

Then, the samples obtained were analyzed.

The appearance of each sample so obtained was homogeneous, pale reddish-brown. No sample had either characteristics of friability, or other macroscopic defects.

Each sample was then cut so as to obtain a parallelepiped-shaped specimen having known size and, for each of them, apparent density was determined by weighing.

The specimens of the various samples so obtained were then dried in an oven at a temperature of 60 °C until a constant weight, and then stored in a dessicator.

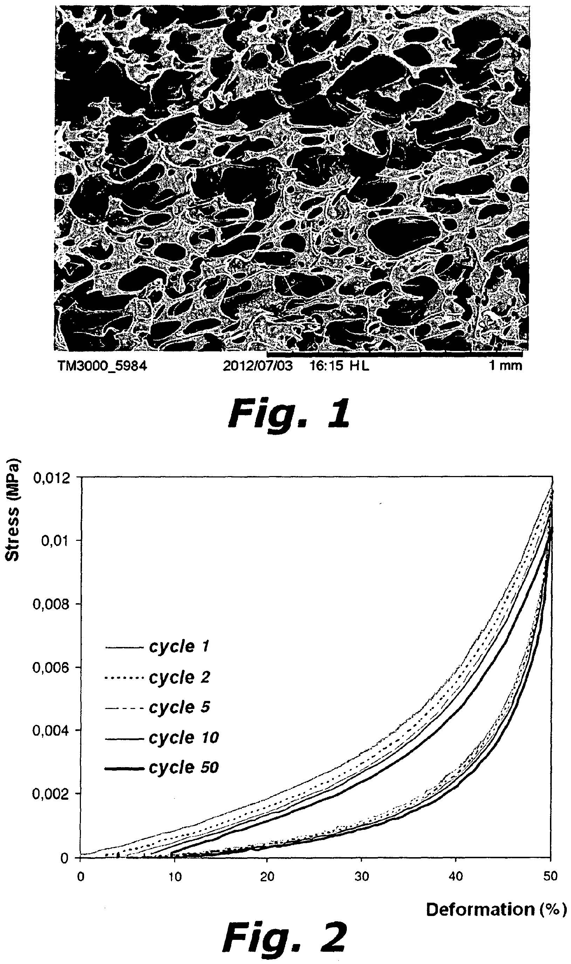

A scanning electron microscope (SEM) HITACHI TM3000 was used for assessing the microscopic structure of the various samples. Figure 1 shows a SEM image obtained for the cross-section of the sample A8 (with 100x magnification).

Evaluation of the mechanical behavior of the specimens of the samples obtained, was performed by using a INSTRON 5944 universal testing machine, under ambient temperature conditions. In particular, analysis of the mechanical characteristics of each sample was performed by subjecting it to repetitive compression tests (50 cycles) at 50%, at a strain rate of 100 mm/min., with a rest of 1 s between subsequent compression cycles.

Figure 2 shows a graph of the compression curves obtained for the specimen of the sample A8, in which, for clarity reasons, only compression-release cycles 1, 2, 5, 10 and 50 are shown.

In addition, fire reaction of the foams A8 and A10 was assessed according to EN-ISO 11925-2 standard (concerning flammability of construction products as a result of the direct action of the flame), by using a flame directed to the bottom edge of each specimen for a time of 15 seconds, and by recording the advancement time of the combustion zone above the point of incidence of the flame, necessary to reach a height of 150 mm in the combustion zone. Also, in each specimen, possible detachment of flaming particles or drops was evaluated during a time of 20 seconds after application of the flame.

The same test was performed for comparison purposes on a sample of foam material prepared without tannins and containing ethoxylated coconut amine and isocyanate (12 g and 4 g, respectively), referred to as AST, as well as on a specimen of commercial polyurethane foam-rubber, referred to as AC.

It was found by measurements that the samples A8 and A10 have an apparent density of 0.14 g/cm³, while the apparent density of the sample A9 was found to be 0.12 g/cm³. For the sample A20, including a blowing agent, the apparent density is 0.09 g/cm³.

The sample A8 (the image if which, 100x magnified, is shown in Figure 1), has a honeycomb structure formed by open-cell having a predominantly ellipsoidal geometry, the diameter of which is in the range between about 50 and 230 µ.

The following Table 2 shows the results obtained from the test performed by applying EN-ISO 11925-2 standard to the above mentioned specimens of the samples A8, A10, AST and AC.

**Table 2 - Reaction to fire - Samples A8, AST, AC**

| ***Sample*** | ***A8*** | ***A10*** | ***AST*** | ***AC*** |
|---|---|---|---|---|
| Time(s) for reaching 150 mm | *20* | *Practically instant auto-extinction* | *20* | *3* |
| Detachment of flaming particles or drops | *NO* | *NO* | *Yes* | *Yes* |

From the results shown in Table 2 it can be noticed that the sample A10 has an optimal behavior with respect to fire resistance. In addition, for the sample A8, the composition of which does not include a fire retardant agent, neither detachment nor falling of flaming particles or drops was observed. In contrast, for the sample AST (without tannins), and for the commercial foam-rubber sample AC, releasing of material on fire was observed, with the risk of generation new outbreaks of fire and fire propagation.

From the diagram of Figure 2 it can be inferred that the foam material of the invention has a high degree of elasticity. Under the test conditions, after the first cycle of compression, a recovery of 95% of its original shape was obtained. After the fifth cycle, the recovery was 90% and, even after 50 cycles of compression, the recovery was at any rate higher than 80%.

In conclusion, the new composition and the process according to the invention, allow tannin based foam materials to be manufactured, having characteristics of flexibility and elasticity, which are suitable for use in many applications and are advantageous compared to other flexible materials based on raw materials of petrochemical origin, both with regard to fire resistance, or with respect to emissions of volatile organic compounds (VOC). The foam materials of the present invention, the composition of which includes a high percentage of raw materials derived from renewable sources, widely available, and has therefore a low environmental impact, can be prepared by a process quick and simple to be carried out.

## Claims

1. Composition for manufacturing an elastic tannin based foam material, comprising tannins according to an amount generally greater than 10% by weight, and an isocyanate according to an amount not smaller than 5% by weight, said composition including an amount of tannins smaller than 80% by weight and an amount of isocyanate in the range between 5% and 80% by weight, and in that it comprises at least one substance having an aminic functionality as well as an alkoxylate functionality, which substance includes at least one amino group and at least one alkoxylated group, said at least one amino group and at least one alkoxylated group being part of a same molecule,
**characterized in that** it comprises said substance including at least one amino group and at least one alkoxylate group according to an amount not greater than 80% by weight, and **in that** said substance is an alkoxylated derivative of a coco amine, of a tallow amine, of oleylamine and/or of stearylamine.

2. Composition according to claim 1, **characterized in that** said at least one alkoxylated amine comprises ethoxylated and/or propoxylated alkoxy groups or mixtures thereof, having a degree of alkoxylation preferably comprised between 1 and 40.

3. Composition according to claim 1 or 2, **characterized in that** said at least one alkoxylated amine is a propoxylated amine.

4. Composition according to any one of claims 1 to 3, **characterized in that** said substance including at least one amino group and at least one alkoxylated group is an ethoxylated amine.

5. Composition according to any one of claims 1 to 4 **characterized in that** said tannins are condensed tannins and/or hydrolyzable tannins, possibly chemically modified, and/or mixtures thereof, preferably in the form of a powder, and **in that** they are used according to an amount not greater than 80% by weight.

6. Composition according to any one of claims 1 to 5, **characterized in that** it comprises water up to 40% by weight, in addition to the water contained in the tannins and in other possible components.

7. Composition according to any one of claims 1 to 6, **characterized in that** it further includes at least a blowing agent, and/or at least a substance having a low boiling point and/or mixtures thereof.

8. Composition according to any one of claims 1 to 7, **characterized in that** it further includes at least a compound adapted to reduce viscosity of the initial mixture, according to an amount in the range between 40% and 100% by weight with respect to the tannin contained in the composition.

9. Composition according to any one of claims 1 to 8, **characterized in that** it further includes at least an additive, such as a cross-linking, emulsifying, surface-active, wetting, plasticizing or foaming agent, or an agent able to control the proportion between open cells /closed cells, and/or a compound for reducing the fire self-extinguishing time or for increasing fire resistance or a fire-retardant agent, according to a proportion not greater than 50% by weight, conveniently smaller than 20% by weight.

10. Elastic tannin based foam material, **characterized in that** it is obtainable from a composition according to any one of claims 1 to 9.

11. Process for manufacturing an elastic tannin based foam material starting from a composition according to any one of claims 1 to 9, **characterized in that** it comprises the steps of:
- preparing a mixture containing dosed amounts of powdered tannin and of said substance including at least one amino group and at least one alkoxylated group, the amount of tannin being smaller than 80% by weight of the composition, and the amount of said substance including at least one amino group and at least one alkoxylated group being not greater than 80% by weight of the composition,
- executing a first mixing phase by mechanically stirring such a mixture,
- adding to the mixture so obtained at least a possible additive, according to a proportion not greater than 50% by weight, conveniently smaller than 20% by weight,
- subjecting the mixture so obtained to a homogenization phase,
- adding said isocyanate to the mixture, according to an amount in the range between 5% and 80% by weight of the composition,
- subjecting the mixture so obtained to a stirring phase,
- pouring the mixture in a mold previously prepared, and
- waiting for expansion of the mixture in the mold, and hardening of the foam material so obtained.

## Patentansprüche

1. Zusammensetzung zum Herstellen eines elastischen Schaumstoffmaterials auf Tanninbasis, umfassend Tannine in einer Menge von im Allgemeinen größer als 10 Gew.-% und ein Isocyanat in einer Menge von nicht kleiner als 5 Gew.-%, wobei die Zusammensetzung eine Menge an Tanninen von kleiner als 80 Ges.-% und eine Menge an Isocyanat in dem Bereich zwischen 5 Gew.-% und 80 Gew.-% enthält und wenigstens einen Stoff mit einer Aminfunktionalität und einer Alkoxylatfunktionalität umfasst, welcher Stoff wenigstens eine Aminogruppe und wenigstens eine alkoxylierte Gruppe enthält, wobei die wenigstens eine Aminogruppe und wenigstens eine alkoxylierte Gruppe Teile des gleichen Moleküls sind,
**dadurch gekennzeichnet, dass** sie den Stoff, der wenigstens eine Aminogruppe und wenigstens eine
alkoxylierte Gruppe enthält, in einer Menge von nicht größer als 80 Gew.-% enthält und dass der Stoff ein alkoxyliertes Derivat eines Cocoamins, eines Talgamins, von Oleylamin und/oder von Stearylamin ist.

2. Zusammensetzung gemäß Anspruch 1, **dadurch gekennzeichnet, dass** das wenigstens eine alkoxylierte Amin ethoxylierte und/oder propoxylierte Alkoxygruppen oder Gemische davon umfasst und einen Alkoxylierungsgrad von vorzugsweise in dem Bereich zwischen 1 und 40 aufweist.

3. Zusammensetzung gemäß Anspruch 1 oder 2, **dadurch gekennzeichnet, dass** das wenigstens eine alkoxylierte Amin ein propoxyliertes Amin ist.

4. Zusammensetzung gemäß einem der Ansprüche 1 bis 3, **dadurch gekennzeichnet, dass** der Stoff, der wenigstens eine Aminogruppe und wenigstens eine alkoxylierte Gruppe enthält, ein ethoxyliertes Amin ist.

5. Zusammensetzung gemäß einem der Ansprüche 1 bis 4, **dadurch gekennzeichnet, dass** die Tannine kondensierte Tannine und/oder hydrolysierbare Tannine sind, möglicherweise chemisch modifiziert, und/oder Gemische davon, vorzugsweise in der Form eines Pulvers, und dass sie in einer Menge von nicht größer als 80 Gew.-% verwendet werden.

6. Zusammensetzung gemäß einem der Ansprüche 1 bis 5, **dadurch gekennzeichnet, dass** sie bis zu 40 Gew.-% Wasser zusätzlich zu dem Wasser, das in den Tanninen und in anderen möglichen Komponenten enthalten ist, umfasst.

7. Zusammensetzung gemäß einem der Ansprüche 1 bis 6, **dadurch gekennzeichnet, dass** sie ferner wenigstens ein Blähmittel und/oder wenigstens einen Stoff mit einem niedrigen Siedepunkt und/oder Gemische davon umfasst.

8. Zusammensetzung gemäß einem der Ansprüche 1 bis 7, **dadurch gekennzeichnet, dass** sie ferner wenigstens eine Verbindung, die dafür ausgelegt ist, die Viskosität des Angangsgemischs zu verringern, in einer Menge in dem Bereich zwischen 40 Gew.-% und 100 Ges.-%, bezogen auf das in der Zusammensetzung enthaltene Tannin, enthält.

9. Zusammensetzung gemäß einem der Ansprüche 1 bis 8, **dadurch gekennzeichnet, dass** sie ferner wenigstens einen Zusatzstoff, wie z. B. ein Vernetzungsmittel, Emulgierungsmittel, grenzflächenaktives Mittel, Netzmittel, einen Weichmacher oder einen Schaumbildner, oder ein Mittel, das fähig ist, das Verhältnis zwischen offenen Zellen und geschlossenen Zellen zu steuern, und/oder eine Verbindung zum Verringern der Feuer-Selbstlöschzeit oder zum Erhöhen der Feuerbeständigkeit oder ein flammhemmendes Mittel in einer Menge von nicht größer als 50 Gew.-%, vorteilhaft kleiner als 20 Gew.-%, enthält.

10. Elastisches Schaumstoffmaterial auf Tanninbasis, **dadurch gekennzeichnet, dass** es aus einer Zusammensetzung gemäß einem der Ansprüche 1 bis 9 erhältlich ist.

11. Verfahren zum Herstellen eines elastischen Schaumstoffmaterials auf Tanninbasis, ausgehend von einer Zusammensetzung gemäß einem der Ansprüche 1 bis 9, **dadurch gekennzeichnet, dass** es die Schritte umfasst:
- Herstellen eines Gemischs, das dosierte Mengen von pulverförmigem Tannin und des Stoffs, der wenigstens eine Aminogruppe und wenigstens eine alkoxylierte Gruppe enthält, enthält, wobei die Menge an Tannin kleiner als 80 Gew.-% der Zusammensetzung ist und die Menge des Stoffs, der wenigstens eine Aminogruppe und wenigstens eine alkoxylierte Gruppe enthält, nicht größer als 80 Gew.-% der Zusammensetzung ist,
- Ausführen eines ersten Mischschritts durch mechanisches Rühren des Gemischs,
- zu dem so erhaltenen Gemisch Zugeben wenigstens eines möglichen Zusatzstoffs in einem Anteil von nicht größer als 50 Gew.-%, vorteilhaft kleiner als 20 Gew.-%,
- Unterwerfen des so erhaltenen Gemischs an einen Homogenisierungsschritt,
- zu dem Gemisch Zugeben des Isocyanats in einer Menge in dem Bereich zwischen 5 Gew.-% und 80 Gew.-% der Zusammensetzung,
- Unterwerfen des so erhaltenen Gemischs an einen Rührschritt,
- Gießen des Gemischs in eine zuvor vorbereitete Gussform und
- Abwarten der Expansion des Gemischs in der Gussform und Aushärten des so erhaltenen Schaumstoffmaterials.

## Revendications

1. Composition pour la fabrication d'un matériau moussé élastique à base de tanin, comprenant des tanins selon une quantité généralement supérieure à 10% en poids et un isocyanate selon une quantité non inférieure à 5% en poids, ladite composition comprenant une quantité de tanins inférieure à 80% en poids et une quantité d'isocyanate comprise entre 5% et 80% en poids et comprenant au moins une substance ayant une fonctionnalité aminique ainsi qu'une fonctionnalité alcoxylate, cette substance comprenant au moins un groupe amino et au moins un groupe alcoxylé, ledit au moins un groupe amino et au moins un groupe alcoxylé faisant partie d'une même molécule,
**caractérisée en ce qu'**elle comprend ladite substance incluant au moins un groupe amino et au moins un groupe alcoxylate selon une quantité non supérieure à 80% en poids, et **en ce que** ladite substance est un dérivé alcoxylé d'une amine de coco, d'une amine de suif, d'oléylamine et / ou de stéarylamine.

2. Composition selon la revendication 1, **caractérisée en ce que** ladite au moins une amine alcoxylée comprend des groupes alcoxy éthoxylés et / ou propoxylés, ou des mélanges de ceux-ci, un ayant un degré d'alcoxylation compris de préférence entre 1 et 40.

3. Composition selon la revendication 1 ou la revendication 2, **caractérisée en ce que** ladite au moins une amine alcoxylée est une amine propoxylée.

4. Composition selon l'une quelconque des revendications 1 à 3, **caractérisée en ce que** ladite substance comprenant au moins un groupe amino et au moins un groupe alcoxylé est une amine éthoxylée.

5. Composition selon l'une quelconque des revendications 1 à 4, **caractérisée en ce que** lesdits tanins sont des tanins condensés et / ou des tanins hydrolysables, éventuellement chimiquement modifiés, et / ou des mélanges de ceux-ci, de préférence sous forme de poudre, et **en ce qu'**ils sont utilisés selon une quantité non supérieure à 80% en poids.

6. Composition selon l'une quelconque des revendications 1 à 5, **caractérisée en ce qu'**elle comprend de l'eau jusqu'à 40% en poids, en plus de l'eau contenue dans les tanins et dans d'autres composants possibles.

7. Composition selon l'une quelconque des revendications 1 à 6, **caractérisée en ce qu'**elle comprend en outre au moins un agent gonflant, et / ou au moins une substance à faible point d'ébullition et / ou des mélanges de ceux-ci.

8. Composition selon l'une quelconque des revendications 1 à 7, **caractérisée en ce qu'**elle comprend en outre au moins un composé apte à réduire la viscosité du mélange initial, selon une quantité comprise entre 40% et 100% en poids par rapport au tanin contenu dans la composition.

9. Composition selon l'une quelconque des revendications 1 à 8, **caractérisée en ce qu'**elle comprend en outre au moins un additif tel qu'un agent réticulant, émulsifiant, tensioactif, mouillant, plastifiant ou moussant, ou un agent apte à contrôler la proportion entre des cellules ouvertes et des cellules fermées, et / ou un composé permettant de réduire le temps d'auto-extinction d'un feu ou d'augmenter la résistance au feu ou un agent retardant du feu, selon une proportion non supérieure à 50% en poids, de façon appropriée, inférieure à 20% en poids.

10. Matière en mousse élastique à base de tanin, **caractérisée en ce qu'**elle est apte à être obtenue à partir d'une composition selon l'une quelconque des revendications 1 à 9.

11. Procédé de fabrication d'un matériau moussé élastique à base de tannin, à partir d'une composition selon l'une quelconque des revendications 1 à 9, **caractérisé en ce qu'**il comprend les étapes consistant à :
- préparer un mélange contenant des quantités dosées de tanin en poudre de ladite substance comprenant au moins un groupe amino et au moins un groupe alcoxylé, la quantité de tanin étant inférieure à 80% en poids de la composition et la quantité de ladite substance comprenant au moins un groupe amino et au moins un groupe alcoxylé n'étant pas supérieur à 80% en poids de la composition,
- exécuter une première phase de mélange par agitation mécanique d'un tel mélange,
- ajouter au mélange ainsi obtenu au moins un additif éventuel, selon une proportion non supérieure à 50% en poids, de façon appropriée inférieure à 20% en poids,
- soumettre le mélange ainsi obtenu à une phase d'homogénéisation,
- ajouter ledit isocyanate au mélange, selon une quantité comprise entre 5% et 80% en poids de la composition,
- soumettre du mélange ainsi obtenu à une phase d'agitation,
- verser le mélange dans un moule préalablement préparé et
- attendre l'expansion du mélange dans le moule, et laisser durcir le matériau moussé ainsi obtenu.
